# EUROPEAN PATENT APPLICATION

(11) **EP 4 588 765 A1**
(43) Date of publication of application: **23.07.2025**
(21) Application number: 25153386.5
(22) Date of filing: 22.01.2025
(51) Int. Cl.: B62H 3/08, B62H 5/00, B60L 53/16

(54) **BIKE STAND**

(30) Priority: 22.01.2024 CZ 20240020
(71) Applicant: Vich, Petr, 33152 Mrtnik (CZ)
(72) Inventor: Vich, Petr, 33152 Mrtnik (CZ)
(74) Representative: Zmeskal, Lukas

(57) **Abstract**

The sublevel bike stand includes an upper horizontal plate (1) for housing in the surrounding surface. It is provided with at least one elongated opening (2) with a shaped bottom for housing a bike wheel. The stand has a plastic shell structure and is provided with at least one protruding element (3) for arresting the stand in the material below the level of the surrounding surface. The protruding element (3) may be arranged on the outside of the shaped bottom of the opening (2). The upper plate (1) may be provided with a perimeter flange (4), where the angle (α) between the bottom area (5) of the upper plate (1) and the inner area (6) of the perimeter flange (4) is between 90° and 180°. The bottom edge of the perimeter flange (4) may be provided with a protruding element (3).

The shaped bottom of the opening (2) for housing the wheel may include at least two partially overlapping circular segments (A), (B) having different maximum widths for housing wheels of different dimensions. A fastening element (7) for attaching a lock or an electrical socket (9) for charging electric bikes may be used.

## Description

### Technical Field

The proposed invention falls within the field of bike stands, specifically, separate supports or brackets for parking or storing bikes having cutouts or bracket rails for encircling the bottom part of the wheel. It is a sublevel stand, meaning that its upper surface is substantially at the level of the surrounding surface and is generally walkable. The other main structural parts of the stand are then arranged below the level of the surrounding surface.

### Background of the Invention

The document US 3,942,646 describes a bike stand in the form of a concrete block with a vertical groove for housing the bottom part of the bike wheel. The block is preferably attached to the substrate on which it rests using a suitable adhesive, e.g. epoxy resin. The block is preferably provided with a through opening designed for a chain to be pulled through to lock the housed bike.

The document GB 2009068 describes a plastic stand of shell structure for bikes, mopeds, and motorcycles. The stand has the shape of a container designed to be filled with a dense material that serves as a weight against unintentional movement of the stand. The stand has at least one elongated opening on the upper horizontal surface provided with a shaped bottom for housing the bottom part of the vehicle wheel. The stand is provided with lateral walls and may also be provided with a bottom. The dense material may be concrete, sand, water, or other suitable filling material. The stand may be provided with protrusions on the bottom side preventing the stand from sliding on the surface. The stand may include two openings for housing the vehicle wheel. The openings are arranged crosswise over each other and have different widths to make the stand suitable for housing a bike wheel or motorcycle wheel.

The document US 5,267,657 describes a plastic stand of shell structure for bikes. The stand may have the shape of a closed container having at least one elongated opening (groove) on its upper surface for housing a bike wheel. The container is from above provided with closable filling openings for filling ballast material (for example sand or water). Alternatively, the stand may include vessels open from above used for filling with ballast material (for example sand, soil, decorative stones). In each embodiment, it is essential that the ballast material can be easily removable and the stand easily movable thanks to its light weight. The stand may include a flat margin or a fitting around the perimeter of its base by which the stand rests on the surrounding surface. The flat margin or fitting may be provided with several openings through which the stand can be nailed to the substrate if desired.

The document CN 204415574 describes a sublevel stand having two openings arranged in a row in its upper surface, provided with a shaped bottom for housing the front and rear wheels of a two-wheeled vehicle. The bottoms of the openings are provided with a set of electrical contacts for triggering an alarm in the event of unauthorized handling of the vehicle. The body of the stand may be integrally cast in concrete.

The document GB 425265 describes street paving tiles with an elongated opening for housing a bottom part of a bike wheel. It is a sublevel stand designed to be recessed into the surrounding surface such that its upper horizontal area with the opening is a walkable area having substantially the same level as the surrounding surface. The described upper horizontal area of the paving tiles is rectangular and the longitudinal axis of the opening is non-parallel relative to the perimeter edges of the upper horizontal plate, such that there is no collision of the handlebars of bikes housed side-by-side.

The document GB 501912 also describes street paving tiles (a sublevel stand) with an elongated opening for housing a bottom part of a bike wheel. The lateral walls of the opening are shaped to hold wheels of different widths in the transverse direction. It can be said that the opening includes three circular segments of different widths with a common longitudinal axis. The theoretical center of the circles of the circular segments is common to all the circles.

The document JP 2005088857 also describes street paving tiles (a sublevel stand) with an elongated opening for housing a bottom part of a bike wheel. The described upper horizontal area of the paving tiles is rectangular and the longitudinal axis of the opening is non-parallel relative to the perimeter edges of the upper horizontal plate, such that there is no collision of the handlebars of bikes housed side-by-side.

A cumulative disadvantage of the known sublevel stands is in particular the high weight given by the materials from which they are produced. Above-ground stands can then be unsightly in certain locations (e.g. historic town centers or other architecturally designed locations) and are space consuming as they are not walkable.

### Summary of the Invention

The essence of the invention is a sublevel bike stand structure. For the purposes of this application, the term "sublevel" means that the stand is particularly intended to be recessed with a substantial part thereof below the level of the surrounding surface. This means that, when the stand is used, only the upper part of the stand - the upper horizontal plate with at least one elongated opening for housing a bike wheel - is substantially at surface level. This opening is provided with a shaped bottom which, generally with the other essential parts of the stand, is situated below the level of the surrounding surface. For use, the stand is housed in an excavation in which the remaining surrounding cavities are subsequently filled and compacted. This ensures that a defined position is maintained, which is necessary for sufficient stability of the housed bike. For above-ground use (not extending below the level of the surrounding surface), the sublevel stand is substantially unusable.

The essential part here is that the stand has a shell structure and is provided with at least one protruding element for arresting the stand in the material below the level of the surrounding surface. According to the established terminology, the shell is a thin-walled spatial structure with a very small thickness compared to the other dimensions and practically constant throughout the plan. In the case of a stand having a side plan in the order of tens of centimeters, the thickness of the shell material is in the order of units, at most in the lower tens, of millimeters.

The protruding element serves to increase the contact area between the stand and the surrounding material and to prevent the stand from shifting in the vertical direction. The stand is very stable when properly installed in the material below the level of the surrounding ground, as the upper horizontal plate mostly rests on the compacted material as well. The protruding element serves in particular to prevent the stand from being pulled upward above the surrounding surface, which could occur in particular when the housed bike wheel is pulled out of the shaped bottom of the elongated opening.

It follows that the protruding element should protrude from the outer surface of the shell such that the free end of the protruding element is, in the plan view, located at a place different from the place of its contact with the outer surface of the shell. Alternatively, the protruding element may be the margin of the shell. This means that the margin of the shell may be shaped so as to be capable of arresting the stand in the material below the level of the surrounding surface - in the case of an installed stand, the margin of the shell is below the level of the surrounding surface. It is preferred if the protruding element is oriented parallel to the upper horizontal plate, with a deviation of a max. of 30°, i.e. essentially horizontal.

The protruding element may be arranged on the outer side of the shell of the shaped bottom of the opening, for example from below. Such a solution is simple to produce (a plate-like element can be attached from below the shell, which can be, for example, glued or connected by a screw or riveted connection). In addition, the maximum possible amount of compacted material is located above it, such that the protruding element is more loaded and performs its function better.

The upper horizontal plate may be provided with a perimeter flange. The flange is oriented downward such that the angle between the bottom area of the upper horizontal plate and the inner area of the flange is greater than 90° and lower than 180°. In other words, the perimeter flange faces downward and away from the plan of the upper horizontal plate. Due to this shape, the stand can be easily produced from shell material as the stand can be easily removed from the negative mold of the corresponding shape. Thus, a bend of the shell material is situated between the upper horizontal plate and the flange. The perimeter flange serves to reinforce the upper horizontal plate. The perimeter flange may preferably be full-perimeter.

In a preferred embodiment, the bottom edge of the perimeter flange may be provided with a protruding element oriented parallel to the upper horizontal plate, with a deviation of a max. of 30°. In particular, the protruding element of the perimeter flange may be a perimeter (preferably full-perimeter) skirting of the shell material. Thus, a bend in the shell material is situated between the perimeter flange and the protruding element in the form of the perimeter skirting.

This protruding element of the perimeter flange may be used together or instead of the protruding element of the outer side of the shell of the shaped bottom of the opening. The protruding element of the perimeter flange is generally arranged at a lower depth of the compacted material than the protruding element of the outer side of the shell of the shaped bottom of the opening. However, the support provided to the stand may be sufficient. It can be possibly increased if, for example, there are paving tiles around the stand under which the protruding element of the perimeter flange extends.

The shaped bottom of the opening for housing the wheel may preferably include a shaping (depressions) in the form of at least two partially overlapping circular segments having different maximum widths. In such a case, the circular segments have a common longitudinal axis that is parallel to the longitudinal axis of the given opening. The chord of the circular segments is then identical to the upper horizontal plate and the theoretical centers of the circles of the circular segments are different. The circles of the circular segments may have different diameters. Thanks to this arrangement, wheels of different widths and diameters can be housed in a single opening in the upper horizontal plate. The standard bikes on the market come with wheel dimensions of 12" to 29", most commonly 26, 28 and 29". The shaped bottom as defined ensures safe housing of 2 or 3 wheel dimensions and different diameters and widths.

The upper horizontal plate is preferably tetragonal and the longitudinal axis of the opening is non-parallel relative to the perimeter edges of the upper horizontal plate. As a result, the individual stands can be placed well side by side with their edges. At the same time, thanks to the oriented axis of the opening, the handlebars of the housed bikes are rotated, which means that the stands do not have to be so wide or housed far apart.

In a preferred embodiment, the stand may be provided with a fastening element for attaching a cable lock to secure the housed bike. The fastening element may preferably include a depression in the upper horizontal plate (top to bottom) which is provided with a bar. The bar means a rod-like object attached to the shell, with a free space between it and the wall of the depression for the cable lock to pass through.

The upper horizontal plate may include an electrical socket for outdoor use. This means that such a socket meets the legislative and technical parameters, in particular relating to moisture and dust resistance, so that it can be left exposed to the weather conditions (for example, degree of protection IP 44 or IP 67). The electrical socket may be placed in the depression in the upper horizontal plate. The electrical power supply to the socket can be provided in particular by underground electrical lines connected to the bottom area of the upper horizontal plate. Said electrical socket is particularly useful for charging electric bikes.

A suitable material for the production of the shell of the stand is in particular an ABS (acrylonitrile butadiene styrene) type thermoplastic. It can be very conveniently shaped by vacuum forming, thanks to the shape of the shell, such that mass production of the stand is cheap and simple. Furthermore, thermoplastics such as polycarbonate (PC), hardened polystyrene (HPC), etc. are also considered. Said materials can be both vacuum formed and injection molded. Epoxy-based reactoplastics can be considered as well. The shell can be preferably made of recyclable plastic material, so the production of the stand is environmentally friendly - waste-free.

The opening may be provided with a cover hinged to the upper horizontal plate. The cover may specifically be a solid plate or a grid. The cover prevents any dirt from getting into the opening and especially provides safety to pedestrians because their foot can't get into the opening. It is advisable if the upper horizontal plate is provided with a depression in the opening area, having a depth corresponding the cover thickness. The cover is housed in the depression in its closed position so that it does not project above the upper horizontal plate level, which makes it safe for pedestrians. Further, it is advisable if the depression area is at least double of the cover area - in such a case, the cover is housed in the depression also in its open position and is to be tipped over on its hinges only within the depression.

At the deepest point of the shaped bottom for the vertical housing of the bike wheel and, where applicable, in the depression of the fastening element or the depression of the electrical socket, a drainage opening for the drainage of rainwater is situated.

The stand keeps the bike in a stable upright vertical position where it is immediately available for use. It allows the assembled bike to be stored as compactly as possible and any necessary repairs or adjustments can be made when the bike is arrested.

An important advantage of the sublevel stand, especially in public spaces, is that it is not portable thanks to its structure and fixed placement below the level of the surrounding surface. The stand can be positioned, for example, below the level of the pavement, lawn, bike parking, and other spaces. By this positioning, the sublevel bike stand does not spoil the visual perception of the public spaces such as parks, surrounding spaces of hotels, offices, and restaurants, spaces of private residential houses and their gardens, bike parking spaces at bus and train stations, or surrounding spaces of sports facilities. By positioning the sublevel stand in grassed areas in city parks or private gardens, the mowers can cut grass without fear of damage and without having to remove the sublevel stands.

### Description of Drawings

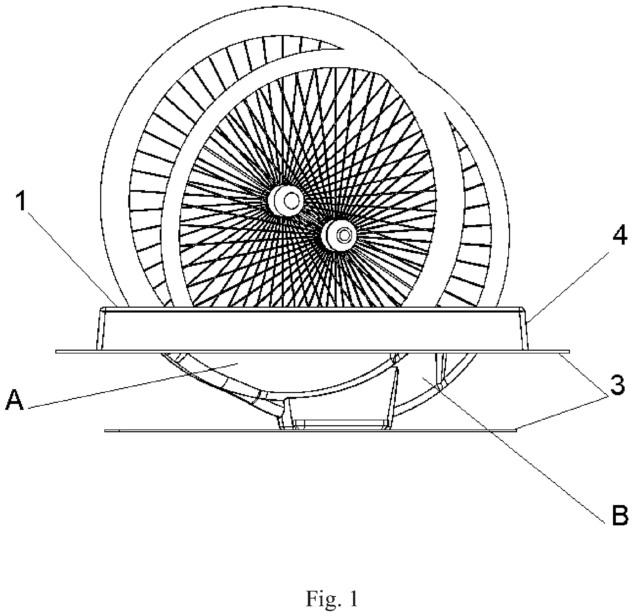

An exemplary embodiment of the proposed invention is described with reference to the drawings, in which
fig. 1 - is a lateral view of the stand indicating the position of the housing of two wheels of different sizes;

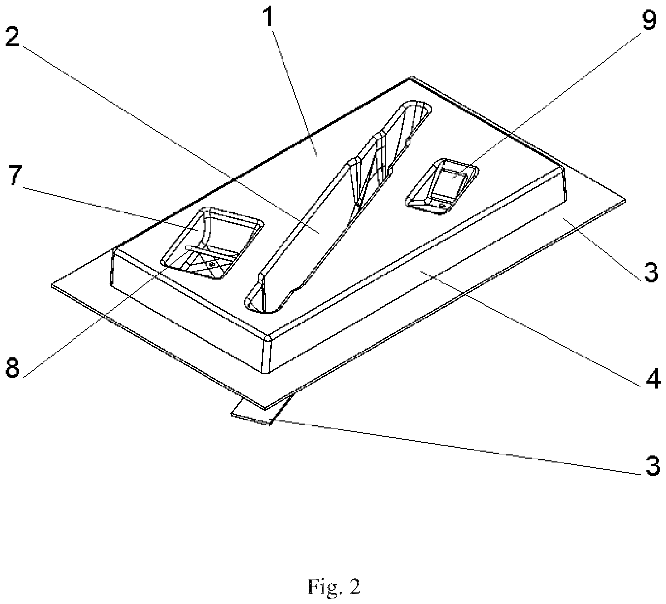

fig. 2 - is an axonometric upper view of the stand of fig. 1, in an embodiment with a fastening element and an electrical socket;

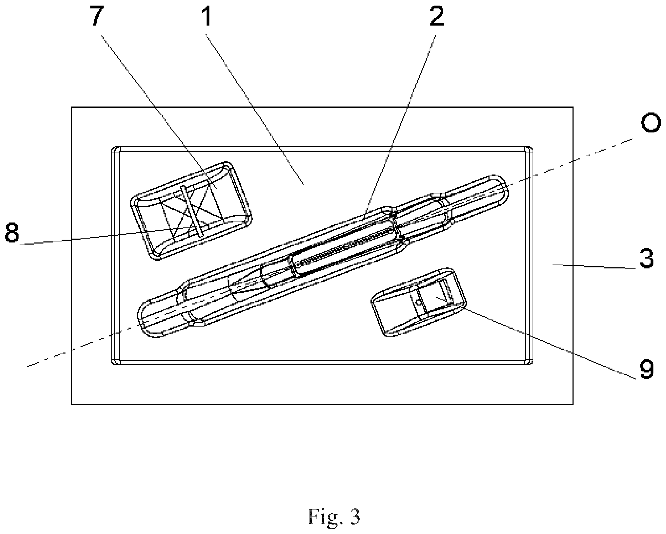

fig. 3 - is a plan view of the stand of fig. 2;

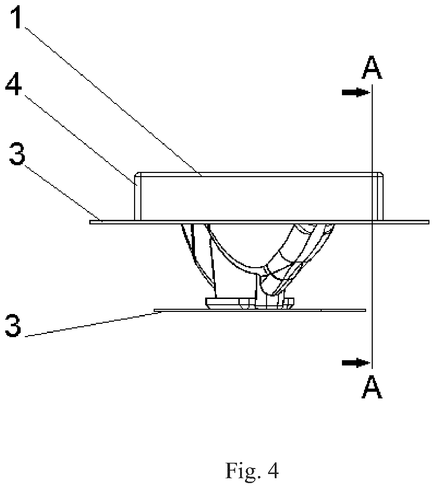

fig. 4 - is a front view of the stand of fig. 2, with the vertical longitudinal section in the A-A plane indicated;

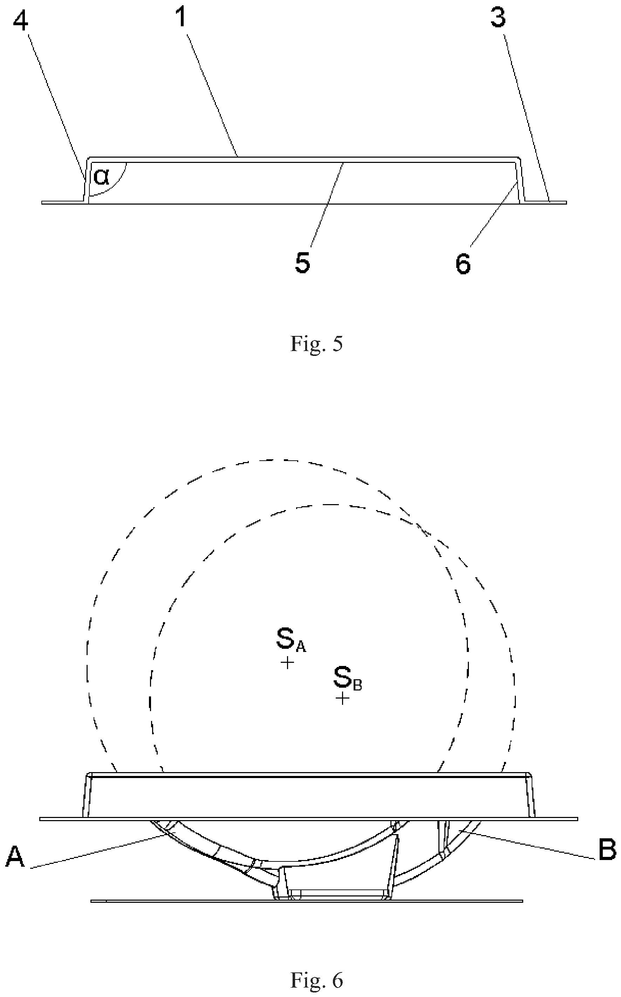

fig. 5 - is the shell of the stand in the vertical longitudinal section in the A-A plane;
fig. 6 - is a lateral view of the stand of fig. 1, with the theoretical centers of the circles of the circular segments indicated;

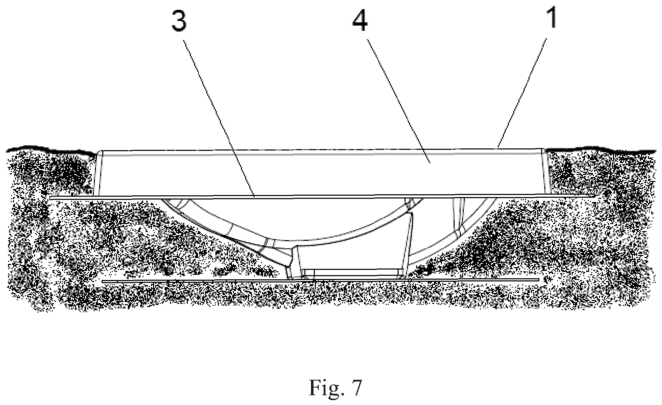

fig. 7 - is a lateral view of the stand of fig. 1 indicating the housing of the stand with the upper horizontal plate in the surrounding surface and with the other main structural parts of the stand below the level of the surrounding surface;

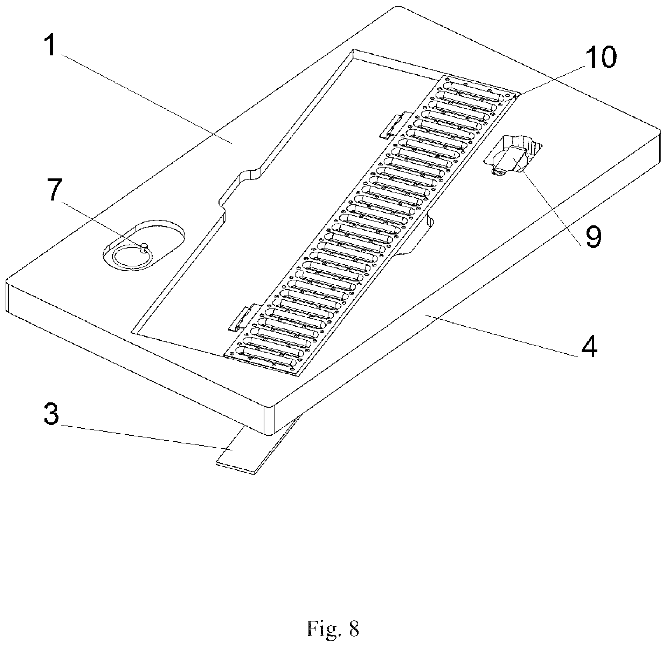

fig. 8 - is an axonometric upper view of the stand provided with the opening cover in its closed position;

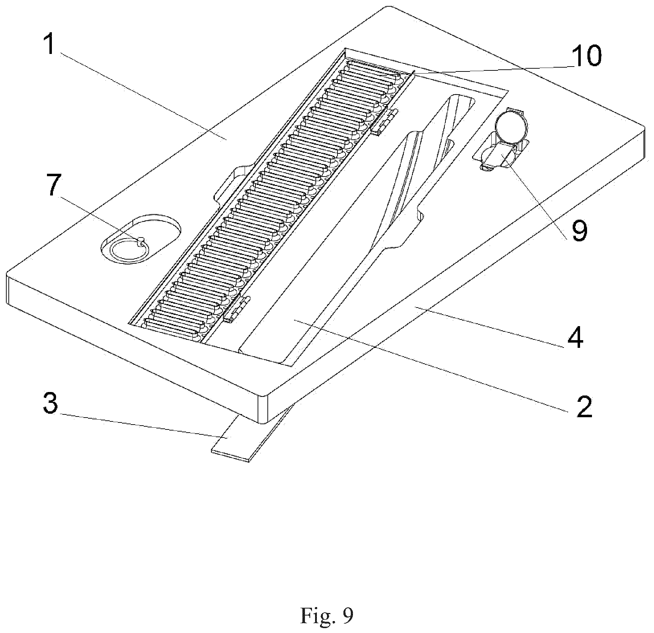

fig. 9 - is an axonometric upper view of the stand provided with the opening cover in its open position.

### Exemplary Embodiment of the Invention

### Example 1

The sublevel bike stand includes an upper horizontal plate 1 for housing in the surrounding surface. In the upper horizontal plate 1, an elongated opening 2 provided with a shaped bottom for housing a bike wheel is arranged. The stand has a shell structure and is provided with two protruding elements 3 for arresting the stand in the material below the level of the surrounding surface.

The first protruding element 3 is arranged on the outer side of the shell of the shaped bottom of the opening 2. It is an elongated plate-like element that is attached externally to the deepest part of the shaped bottom by several rivets. The longitudinal (longest) axis of the plate-like element is substantially parallel to the longitudinal axis O of the opening 2. The length of the plate-like element is substantially identical to the length of the diagonal of the upper horizontal plate 1.

The upper horizontal plate 1 is provided with a perimeter flange 4. The perimeter flange 4 is oriented downward and out of the plan view of the upper horizontal plate 1 such that the angle α between the bottom area 5 of the upper horizontal plate 1 and the inner area 6 of the perimeter flange 4 is approximately 95°. The bottom edge of the perimeter flange 4 is provided with a second protruding element 3. This second protruding element 3 takes the form of a full-perimeter skirting of the shell material. Both protruding elements 3 are oriented parallel to the upper horizontal plate 1.

The shaped bottom of the opening 2 for housing the wheel includes two partially overlapping circular segments A, B. The circular segments A, B have different maximum widths. The circular segments A, B have a common longitudinal axis that is parallel to the longitudinal axis O of the opening 2. The chord of the circular segments A, B is identical to the upper horizontal plate 1. The theoretical centers S_{A}, S_{B} of the circles of the circular segments A, B are different. One of the circular segments B narrows 1x stepwise at its end that does not overlap with the other circular segment A. This makes it possible to house a wider wheel of a smaller diameter or a narrower wheel of a larger diameter in this circular segment B.

The upper horizontal plate 1 is rectangular and the longitudinal axis O of the opening 2 is non-parallel relative to the perimeter edges of the upper horizontal plate 1. The stand is provided with a fastening element 7 for attaching a cable lock. The fastening element 7 includes a depression in the upper horizontal plate 1, which is provided with a bar 8. The stand is further provided with an electrical socket 9 for outdoor use on the upper horizontal plate 1. The shell is made of a recyclable plastic material.

### Example 2

This stand differs from the one described in Example 1 by the perimeter flange 4 not provided with the second protruding element 3 (the full-perimeter skirting of the shell material). The fastening element 7 for attaching a cable lock is a metal ring in this case, which is attached by a vertical pin into a depression in the upper horizontal plate 1. The opening 2 is provided with a hinged cover 10 attached by hinges to the upper horizontal plate 1. The cover 10 is a grid. The upper horizontal plate 1 is provided with a depression in the opening area, having a depth corresponding the cover 10 thickness and having area of size being more than double the size of the cover 10 area. The cover 10 is housed in the depression in its closed and open position.

### List of Reference Signs

1 - upper horizontal plate
2 - opening
3 - protruding element
4 - perimeter flange
5 - bottom area of the upper horizontal plate
6 - inner area of the perimeter flange
7 - fastening element
8 - bar
9 - electrical socket
10 - cover
A - first circular segment
B - second circular segment
S_{A} - theoretical center of the circle of the first circular segment
S_{B} - theoretical center of the circle of the second circular segment
O - longitudinal axis of the opening

## Claims

1. A sublevel bike stand comprising an upper horizontal plate (1) for housing in the surrounding surface, wherein at least one elongated opening (2) with a longitudinal axis (O) is arranged in the upper horizontal plate (1), which is provided with a shaped bottom for housing a bike wheel, **characterized in that** the stand has a shell structure and is provided with at least one protruding element (3) for arresting the stand in the material below the level of the surrounding surface.

2. The sublevel stand according to claim 1, **characterized in that** the longest axis of the protruding element (3) is oriented in the vertical section parallel to the upper horizontal plate (1), with a deviation of a max. of 30°.

3. The sublevel stand according to claim 1 or 2, **characterized in that** the protruding element (3) is arranged on the outer side of the shell of the shaped bottom of the opening (2).

4. The sublevel stand according to any one of the preceding claims 1 to 3, **characterized in that** the upper horizontal plate (1) is provided with a perimeter flange (4) oriented such that the angle (α) between the bottom area (5) of the upper horizontal plate (1) and the inner area (6) of the perimeter flange (4) is greater than 90° and lower than 180°, wherein the bottom edge of the perimeter flange (4) is provided with a protruding element (3) oriented parallel to the upper horizontal plate (1), with a deviation of a max. of 30°.

5. The sublevel stand according to any one of the preceding claims 1 to 4, **characterized in that** the shaped bottom of the opening (2) for housing the wheel includes at least two partially overlapping circular segments (A), (B) having different maximum widths, wherein the circular segments (A), (B) have a common longitudinal axis that is parallel to the longitudinal axis (O) of the opening (2), the chord of the circular segments (A), (B) is identical to the upper horizontal plate (1) and the theoretical centers (S_{A}), (S_{B}) of the circles of the circular segments (A), (B) are different.

6. The sublevel stand according to any one of the preceding claims 1 to 5, **characterized in that** the upper horizontal plate (1) is tetragonal and the longitudinal axis (O) of the opening (2) is non-parallel to the perimeter edges of the upper horizontal plate (1).

7. The sublevel stand according to any one of the preceding claims 1 to 6, **characterized in that** it is provided with a fastening element (7) for attaching a cable lock.

8. The sublevel stand according to claim 7, **characterized in that** the fastening element (7) includes a depression in the upper horizontal plate (1) provided with a bar (8).

9. The sublevel stand according to any one of the preceding claims 1 to 8, **characterized in that** the upper horizontal plate (1) includes an electrical socket (9) for outdoor use.

10. The sublevel stand according to any one of the preceding claims 1 to 9, **characterized in that** the shell is made of a recyclable plastic material.

11. The sublevel stand according to any one of the preceding claims 1 to 10, **characterized in that** the opening (2) is provided with a hinged cover (10) attached to the upper horizontal plate (1).
